# EUROPÄISCHE PATENTANMELDUNG

(11) **EP 2 853 686 A1**
(43) Veröffentlichungstag der Anmeldung: **01.04.2015**
(21) Anmeldenummer: 13186408.4
(22) Anmeldetag: 27.09.2013
(51) Int. Cl.: F01D 5/14

(54) **Turbinenschaufel, und zugehörige Herstellungsverfahren, Stator, Rotor, Turbine und Kraftwerksanlage**

(71) Anmelder: Siemens Aktiengesellschaft, 80333 München (DE)
(72) Erfinder: Böttcher, Andreas, 40822 Mettmann (DE); Deiss, Olga, 40627 Düsseldorf (DE); Grieb, Thomas, 47802 Krefeld (DE); Heilos, Andreas, 45479 Mülheim an der Ruhr (DE); Lapp, Patrick, 13359 Berlin (DE); Mann, Andreas, 42285 Wuppertal (DE); Siebenborn, Nicola, 45479 Mülheim an der Ruhr (DE)

(57) **Zusammenfassung**

Eine Turbinenschaufel (120, 130) für eine Turbine (100) mit einem Befestigungsbereich (160) und einem sich daran anschließenden Plattformbereich (158), der eine Plattform (162) umfasst, an der ein im Querschnitt profiliertes Schaufelblatt angeordnet ist, soll vermittels technisch einfacher Maßnahmen eine höhere Lebensdauer aufweisen. Dazu ist in eine Oberfläche der Plattform (162) eine geschlossene Nut (170) eingebracht.

## Beschreibung

Die Erfindung betrifft Turbinenschaufel für eine Turbine mit einem Befestigungsbereich und einem sich daran anschließenden Plattformbereich, der eine Plattform umfasst, an der ein im Querschnitt profiliertes Schaufelblatt angeordnet ist. Sie betrifft weiter ein Verfahren zur Herstellung einer derartigen Turbinenschaufel.

Turbinenschaufeln der oben genannten Art dienen in Turbinen zur Umwandlung der Energie eines heißen Gasstroms in rotatorische Energie. Sie weisen typischerweise ein von Hohlräumen zur Führung von Kühlluft durchzogenes, in der Art einer Flugzeugtragfläche profiliertes Schaufelblatt auf, an das sich in Längsrichtung der Schaufel eine Plattform anschließt. An die Plattform schließt sich eine typischerweise in der Art einer Nut-Feder-Verbindung ausgestaltete Befestigung an. Die Plattform dient zur Abdichtung des Befestigungsbereichs gegen das in der Turbine strömende Heißgas.

Solche Turbinenschaufeln sind erheblichen mechanischen Belastungen ausgesetzt. Gerade bei gleichzeitig hoher Temperatur und hoher Drehzahl kommt es zu einer hohen Materialbeanspruchung des Schaufelmaterials. Hierdurch können sich in der Turbinenschaufel Risse bilden, die sich im Laufe der Zeit bei fortgesetzter Beanspruchung ausbreiten. Schließlich kann es zu einem Versagen der Turbinenschaufel kommen, wobei diese zerbricht oder Bruchstücke herausgelöst werden, was stromabwärts zu erheblichen Beschädigungen führen kann.

Aus der EP 1 508 399 A1 ist es bekannt, Schlitze in das Schaufelblatt einzubringen, die linear oder in rechten Winkeln angeordnet sind. Diese sollen die Ausbreitung von Rissen begrenzen, die im Bereich der Schaufelvorderkante entstehen. Lösungsvorschläge für entstehende Risse in anderen Bereichen werden nicht angeboten.

Es ist daher Aufgabe der Erfindung, eine Turbinenschaufel und ein Verfahren der eingangs genannten Art anzugeben, die vermittels technisch einfacher Maßnahmen eine höhere Lebensdauer aufweist bzw. erlaubt.

Diese Aufgabe wird bezüglich der Turbinenschaufel erfindungsgemäß dadurch gelöst, dass in eine Oberfläche der Plattform eine geschlossene Nut eingebracht ist.

Bezüglich des Verfahrens wird die Aufgabe dadurch gelöst, dass die Turbinenschaufel gegossen und anschließend in eine Oberfläche der Plattform eine geschlossene Nut eingebracht wird.

Die Erfindung geht dabei von der Überlegung aus, dass die Schaufelplattform eine Stelle der Turbinenschaufel darstellt, die besonders geringe Kurzzeitfestigkeit (low-cycle-fatigue) aufweist, so dass gerade hier Risse verstärkt auftreten. Das Einbringen zusätzlicher Kühlluftbohrungen für die Film-, Prall- oder konvektive Kühlung der Plattform ist jedoch durch die Schaufelgeometrie und andere Faktoren wie z. B. Position der Maschine und kleiner Spalten zwischen Laufschaufelspitze und angrenzender Innenwand der Turbine schwer möglich und führt zudem zu erhöhtem Kühlluftverbrauch, was wiederum den Wirkungsgrad der Turbine herabsetzt. Daher sollte anstatt einer vollständigen Vermeidung von Rissen eher eine Begrenzung der Rissausbreitung angestrebt werden. Die Ausbreitungsrichtung eines entstehenden Risses auf der Plattform ist jedoch schlechter voraussagbar als auf dem Schaufelblatt selbst. Daher sollte in die Oberfläche der Plattform nach dem Gießen der Schaufel eine Nut eingebracht werden, die die Ausbreitung von Rissen in jeder Richtung verhindert.

In vorteilhafter Ausgestaltung ist die Oberfläche, in die die Nut eingebracht wird, dem Schaufelblatt zugewandt. Dies ist nämlich die Oberfläche, die auch dem Heißgaskanal im Betrieb der Turbine zugewandt ist, und an der somit auch die größten thermischen Belastungen auftreten. Daher ist die Bildung von Rissen insbesondere hier zu erwarten.

In weiterer vorteilhafter Ausgestaltung ist die Nut oval oder kreisförmig ist bzw. wird oval oder kreisförmig eingebracht. Eine runde oder ovale Ausführung der Nut ist einfach einzubringen, beispielsweise mittels Laser oder durch Erodieren, und bietet andererseits eine Symmetrie hinsichtlich der Ausbreitungsrichtung eines möglichen Risses: Unabhängig von der Ausbreitungsrichtung bietet eine runde oder ovale Nut den gleichen Widerstand gegenüber einer weiteren Ausbreitung.

Vorteilhafterweise umschließt die Nut ein örtliches Maximum der betrieblichen thermalen Belastung der Plattform. Hierdurch wird sichergestellt, dass im Betrieb der Turbine ein Riss wahrscheinlich innerhalb des Umschließungsbereichs der Nut auftritt, dessen Ausbreitung dann durch die Nut verhindert wird. Dieses Maximum wird vorteilhafterweise vor dem Einbringen der Nut ermittelt und die Nut wird dann entsprechend eingebracht. Dabei kann die Ermittlung der thermalen Belastung der Plattform mittels Modellrechnungen erfolgen, anhand derer die lokalen Maxima bestimmt werden.

Die Nut ist vorteilhafterweise in der einer Profilhinterkante des Schaufelblatts zugewandten Seite der Oberfläche der Plattform angeordnet bzw. wird dort eingebracht. Insbesondere hier existieren nämlich flächige Bereiche der Plattform, die besonders hohen thermischen Belastungen ausgesetzt sind. Diese befinden sich sowohl auf der Druckseite als auch der Saugseite der Turbinenschaufel, wobei die Belastung auf der Druckseite noch höher ist.

Die Turbinenschaufel weist vorteilhafterweise eine die Nut umfassende Beschichtung auf. Hinsichtlich des Verfahrens wird die Turbinenschaufel also vorteilhafterweise nach dem Einbringen der Nut beschichtet. Hierdurch kann die Nut vor Überhitzungen geschützt werden. Dazu kommt vorteilhafterweise eine thermisch isolierende Beschichtung zum Einsatz, die eine Wärmedämmschicht bildet, z. B. aus Zr02 oder Y204-Zr02.

Ein Stator oder Rotor für eine Turbine umfasst vorteilhafterweise eine derartige Turbinenschaufel bzw. eine derart hergestellte Turbinenschaufel als Leit- bzw. Laufschaufel. Hierbei kann die Turbinenschaufel sowohl im Verdichter als auch in der Turbine zum Einsatz kommen.

Eine Turbine umfasst vorteilhafterweise einen derartigen Stator und/oder Rotor.

Vorteilhafterweise ist die Turbine dabei als Gasturbine ausgelegt. Gerade in Gasturbinen sind die thermischen und mechanischen Belastungen besonders hoch, so dass die beschriebene Ausgestaltung der Turbinenschaufel besondere Vorteile hinsichtlich der Kühlung und damit auch des Wirkungsgrads bietet.

Eine Kraftwerksanlage umfasst vorteilhafterweise eine derartige Turbine.

Die mit der Erfindung erzielten Vorteile bestehen insbesondere darin, dass durch die Einbringung einer geschlossenen Nut um die thermisch am höchsten belasteten Bereiche der Plattform eine übermäßige Ausbreitung von Rissen verhindert wird. Dies erhöht die Lebensdauer und führt zu geringerem Verschleiß und reduziertem Wartungsaufwand. Gleichzeitig erfordert diese Maßnahme vergleichsweise geringen technischen Aufwand und erlaubt eine kostengünstige Realisierung der genannten Vorteile. Sie ist zudem universell einsetzbar für Leitals auch Laufschaufeln der Turbine oder des Verdichters.

Ausführungsbeispiele der Erfindung werden anhand einer Zeichnung näher erläutert. Darin zeigen:
- FIG 1: einen teilweisen Längsschnitt durch eine Gasturbine,
- FIG 2: das Profil einer Laufschaufel,
- FIG 3: einen Längsschnitt durch die Laufschaufel, und
- FIG 4: eine perspektivische Ansicht der Laufschaufel mit Darstellung der thermischen Belastung und in die Plattform eingebrachten geschlossenen Nuten.

Gleiche Teile sind in allen Figuren mit denselben Bezugszeichen versehen.

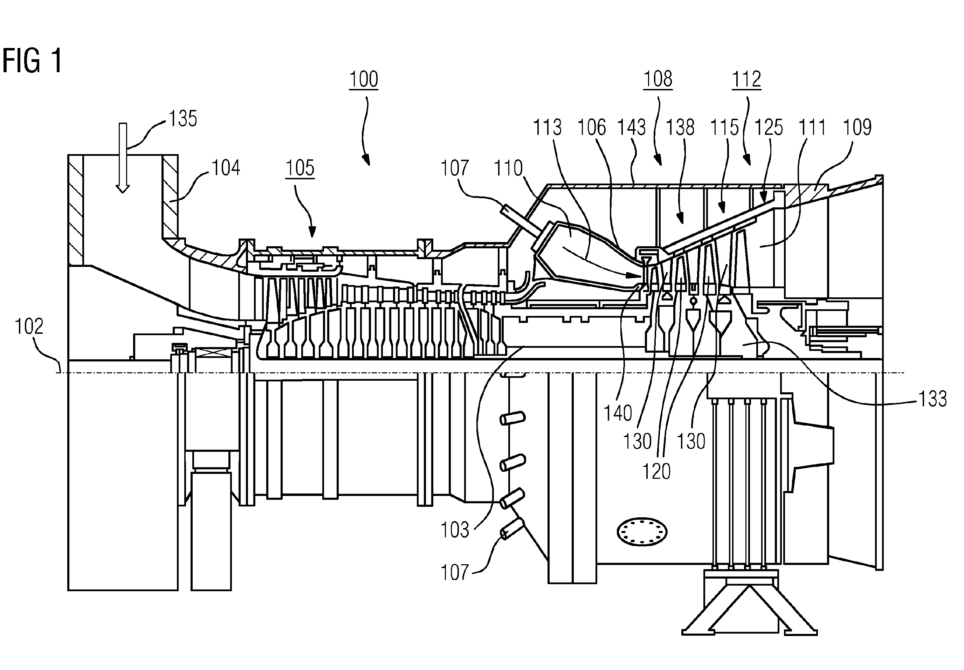

Die FIG 1 zeigt eine Turbine 100, hier eine Gasturbine, in einem Längsteilschnitt. Eine Turbine 100 ist eine Strömungsmaschine, welche die innere Energie (Enthalpie) eines strömenden Fluids (Flüssigkeit oder Gas) in Rotationsenergie und letztlich in mechanische Antriebsenergie umwandelt.

Die Gasturbine 100 weist im Inneren einen um eine Rotationsachse 102 (Axialrichtung) drehgelagerten Rotor 103 auf, der auch als Turbinenläufer bezeichnet wird. Entlang des Rotors 103 folgen aufeinander ein Ansauggehäuse 104, ein Verdichter 105, eine torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem ringförmigen Heißgaskanal 111. Dort bilden beispielsweise vier hintereinander geschaltete Turbinenstufen 112 die Turbine 108. Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125. Die Schaufeln 120, 130 sind leicht gekrümmt profiliert, ähnlich einer Flugzeugtragfläche.

Die Leitschaufeln 130 sind dabei am Stator 143 befestigt, wohingegen die Laufschaufeln 120 einer Reihe 125 mittels einer Turbinenscheibe 133 am Rotor 103 angebracht sind. Die Laufschaufeln 120 bilden somit Bestandteile des Rotors oder Läufers 103. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120.

Dem Fluidstrom wird durch die möglichst wirbelfreie laminare Umströmung der Turbinenschaufeln 120, 130 ein Teil seiner inneren Energie entzogen, der auf die Laufschaufeln 120 der Turbine 108 übergeht. Über diese wird dann der Rotor 103 in Drehung versetzt, wodurch zunächst der Verdichter 105 angetrieben wird. Die nutzbare Leistung wird an die nicht dargestellte Arbeitsmaschine abgegeben.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet. Die hohen Belastungen machen höchstbelastbare Werkstoffe erforderlich.

Die Turbinenschaufeln 120, 130 werden daher aus Titan-Legierungen, Nickel-Superlegierung oder Wolfram-Molybdän-Legierungen gegossen. Die Schaufeln werden für höhere Resistenz gegen Temperaturen so wie Erosion wie zum Beispiel Lochfraß, auch bekannt unter "pitting corrosion", durch Beschichtungen gegen Korrosion (MCrAlX; M = Fe, Co, Ni, Seltene Erden) und Wärme (Wärmedämmschicht, beispielsweise Zr02, Y204-Zr02) geschützt. Die Beschichtung zur Hitzeabschirmung wird Thermal Barrier Coating bzw. kurz TBC genannt. Weitere Maßnahmen, um die Schaufeln hitzeresistenter zu machen, bestehen in ausgeklügelten Kühlkanalsystemen. Diese Technik wird sowohl in den Leit- als auch in den Laufschaufeln 120, 130 angewendet.

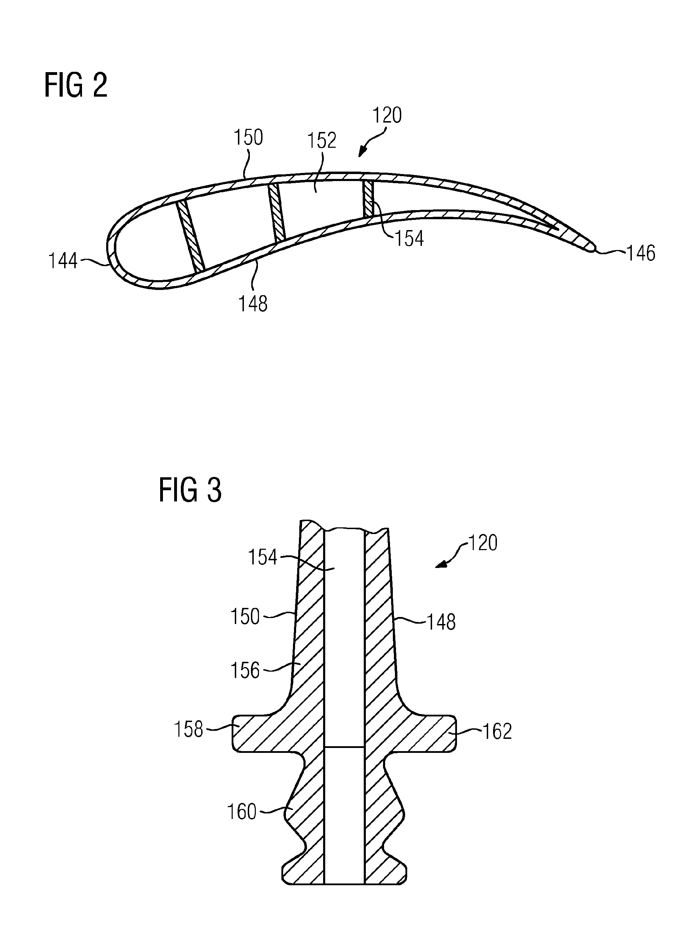

Jede Leitschaufel 130 weist einen auch als Plattform bezeichneten, dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Dichtring 140 des Stators 143 festgelegt. Jeder Dichtring 140 umschließt dabei die Welle des Rotors 103. Ebenso weist jede Laufschaufel einen derartigen Laufschaufelfuß auf, wie in der folgenden FIG 3 noch dargestellt wird, endet jedoch in einer Laufschaufelspitze.

In FIG 2 ist beispielhaft das Profil einer Laufschaufel 120 im Bereich des Schaufelblatts gezeigt. Das Profil ähnelt dem einer Flugzeugtragfläche. Es weist eine abgerundete Profilnase 144 und eine Profilhinterkante 146 auf. Zwischen Profilnase 144 und Profilhinterkante 146 erstrecken sich die konkave Druckseitenwand 148 und die konvexe Saugseitenwand 150 der Laufschaufel 120. Zwischen Druckseitenwand 148 und Saugseitenwand 150 sind Kühlluftkanäle 152 eingebracht, die sich entlang der in die FIG 2 hineinführenden Längsrichtung der Laufschaufel 120 erstrecken und durch Rippen 154 voneinander abgegrenzt sind.

FIG 3 zeigt die Laufschaufel 120 im Längsschnitt aus Sicht der Profilnase 144. Gezeigt sind die Druckseitenwand 148 und die Saugseitenwand 150 im Schaufelblattbereich 156. An den Schaufelbereich 156 schließen sich der Plattformbereich 158 und der Befestigungsbereich 160 an. Im Plattformbereich ist die bereits angesprochene, quer ausgerichtete Plattform 162 angeordnet, die zur Abdichtung des Rotors 103 gegen das Heißgas dient. Unterhalb der Plattform 162 sind im Befestigungsbereich Profilierungen angebracht, mittels derer die Laufschaufel 120 am Rotor 103 in der Art einer Nut-Feder-Verbindung fixiert wird. Eine Leitschaufel 130 weist im Gegensatz dazu in Längsrichtung beiderseits eine Plattform 162 und Befestigungsbereiche auf. Zwischen Druckseitenwand 148 und die Saugseitenwand 150 ist eine Rippe 154 erkennbar.

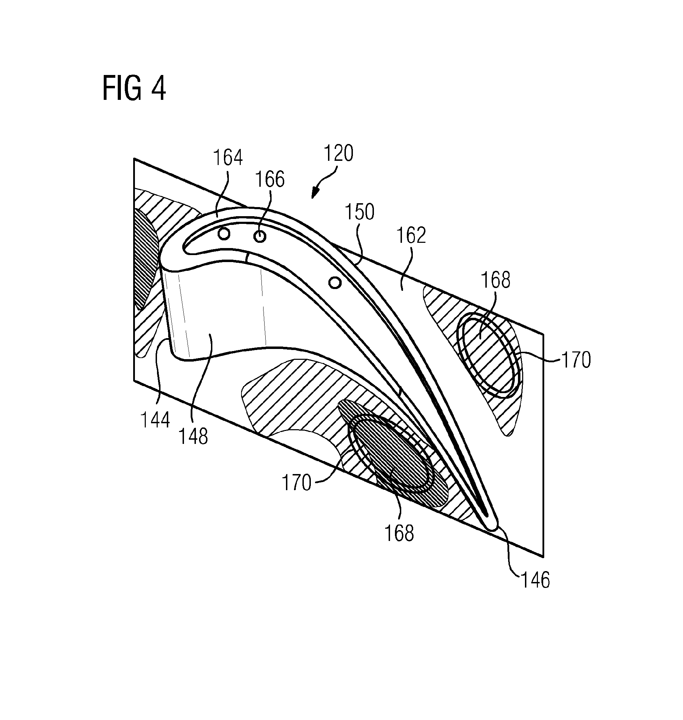

FIG 4 zeigt eine perspektivische Ansicht der Laufschaufel 120. Die dem Betrachter zugewandte Schaufelspitze 164 weist bis auf eine Unterbrechung im Bereich der Profilhinterkante 146 einen fast vollständig umlaufenden Rand auf. Dieser soll einen kontrollierten Abrieb bei einer Wärmeausdehnung der Laufschaufel 120 erlauben. Weiterhin befinden sich in der durch den Rand gebildeten Wanne Kühlluftöffnungen 166.

Die FIG 4 gewährt insbesondere eine vollständigen Blick auf die Plattform 162. Mittels thermodynamischer Modellrechnungen wurden Temperaturbelastungsverteilungen auf der Laufschaufel 120 ermittelt. Diese sind in der FIG 4 durch Helligkeitsabstufungen gezeigt, wobei besonders dunkle Bereiche eine hohe thermische Belastung darstellen. Mittels der Modellrechnungen lassen sich so die beiden Maxima 168 der thermischen Belastung ermitteln, die in FIG 4 dargestellt sind. Diese liegen in der der Profilhinterkante 146 zugewandten Hälfte der Plattform 162.

Um jedes der Maxima 168 sind ovale Nuten 170 eingebracht. Diese können auch rund gefertigt sein und werden nach dem Gießen der Laufschaufel 120 mittels Laser oder durch Erodieren eingebracht, allerdings vor der oben genannten Beschichtung der Laufschaufel 120. Die Nuten 170 verhindern eine Ausbreitung von Rissen, die im Bereich der Maxima 168 entstehen.

Die beschriebene Struktur, insbesondere die Nuten 170 im Plattformbereich 158 wurde am Beispiel einer Laufschaufel 120 erläutert. Ebensolche Strukturen mit Nuten 170 können auch entsprechend in Leitschaufeln 130 vorgesehen sein.

## Patentansprüche

1. Turbinenschaufel (120, 130) für eine Turbine (100) mit einem Befestigungsbereich (160) und einem sich daran anschließenden Plattformbereich (158), der eine Plattform (162) umfasst, an der ein im Querschnitt profiliertes Schaufelblatt angeordnet ist,
**dadurch gekennzeichnet, dass**
in eine Oberfläche der Plattform (162) eine geschlossene Nut (170) eingebracht ist.

2. Turbinenschaufel (120, 130) nach Anspruch 1,
bei der die Oberfläche dem Schaufelblatt zugewandt ist.

3. Turbinenschaufel (120, 130) nach einem der vorhergehenden Ansprüche,
bei der die Nut (170) oval oder kreisförmig ist.

4. Turbinenschaufel (120, 130) nach einem der vorhergehenden Ansprüche,
bei dem die Nut (170) ein örtliches Maximum (168) der betrieblichen thermalen Belastung der Plattform (162) umschließt.

5. Turbinenschaufel (120, 130) nach einem der vorhergehenden Ansprüche,
bei der die Nut (170) in der einer Profilhinterkante (146) des Schaufelblatts zugewandten Seite der Oberfläche der Plattform (162) angeordnet ist.

6. Turbinenschaufel (120, 130) nach einem der vorhergehenden Ansprüche,
die eine die Nut (170) umfassende Beschichtung aufweist.

7. Verfahren zur Herstellung einer Turbinenschaufel (120, 130) für eine Turbine (100) mit einem Befestigungsbereich (160) und einem sich daran anschließenden Plattformbereich (158), der eine Plattform (162) umfasst, an der ein im Querschnitt profiliertes Schaufelblatt angeordnet ist, **dadurch gekennzeichnet, dass**
die Turbinenschaufel (120, 130) gegossen und anschließend in eine Oberfläche der Plattform (162) eine geschlossene Nut (170) eingebracht wird.

8. Verfahren nach Anspruch 7,
bei der die Oberfläche dem Schaufelblatt zugewandt ist.

9. Verfahren nach Anspruch 7 oder 8,
bei der die Nut (170) oval oder kreisförmig eingebracht wird.

10. Verfahren nach einem der Ansprüche 7 bis 9,
bei dem zunächst ein örtliches Maximum (168) der betrieblichen thermalen Belastung der Plattform (162) ermittelt wird und die Nut (170) das örtliche Maximum (168) umschließend eingebracht wird.

11. Verfahren nach einem der Ansprüche 7 bis 10,
bei dem die Nut (170) in die einer Profilhinterkante (146) des Schaufelblatts zugewandte Seite der Oberfläche der Plattform (162) eingebracht wird.

12. Verfahren nach einem Ansprüche 7 bis 11,
bei dem die Turbinenschaufel (120, 130) nach dem Einbringen der Nut (170) beschichtet wird.

13. Stator (143) oder Rotor (103) für eine Turbine (100) mit einer Turbinenschaufel (120, 130) nach einem der Ansprüche 1 bis 6 und/oder einer Turbinenschaufel (120, 130), hergestellt mit dem Verfahren nach einem der Ansprüche 7 bis 12.

14. Turbine (100),
insbesondere Gasturbine (100) mit einem Stator (143) und/oder Rotor (103) nach Anspruch 7.

15. Kraftwerksanlage mit einer Turbine (100) nach Anspruch 14.
